# EUROPEAN PATENT SPECIFICATION

(11) **EP 3 872 679 B1**
(45) Date of publication and mention of the grant of the patent: **03.08.2022**
(21) Application number: 20210288.5
(22) Date of filing: 27.11.2020
(51) Int. Cl.: G06K 7/00, G06K 7/10, G06K 17/00

(54) **TAG READING DEVICE**
TAG-LESEVORRICHTUNG
DISPOSITIF DE LECTURE D'ETIQUETTE

(30) Priority: 25.02.2020 JP 2020029172
(43) Date of publication of application: 01.09.2021
(73) Proprietor: Toshiba Tec Kabushiki Kaisha, Shinagawa-ku Tokyo (JP)
(72) Inventor: Suzuki, Shigeaki, Tokyo 141-8562 (JP)
(74) Representative: Hoffmann Eitle

(56) References cited:
- EP-A1- 1 063 604
- FR-A1- 2 862 406
- JP-A- 2003 030 601
- US-A1- 2010 141 405

## Description

### FIELD

Embodiments described herein relate generally to a tag reading device.

### BACKGROUND

In the related art, a tag reading system collectively reads a plurality of RFID tags (hereinafter, also referred to as wireless tags) . For example, there is a point of sales (POS) system in which a tag reading device collectively reads an RFID tag attached to a commodity to be purchased by a customer to perform commodity registration processing. However, in a tag reading system such as a POS system, it may happen that the RFID tags attached to all the commodities to be purchased cannot be read in actual operation.

If the desired RFID tag was not read, the tag reading system re-executes the RFID tag reading process by the tag reading device. A tag reading device of the related art outputs all the information read from each RFID tag to a higher-level device each time the reading process is executed, even with the same RFID tag. Therefore, in the tag reading system in the related art, there is a problem that the higher-level device has to carefully examine the information read from the RFID tag by using the tag reading device to execute a duplicate check.

US 2010/141405 A1 relates to a radio tag reading device having a target tag storage unit, a non-target storage unit, and an antenna. The target tag storage unit stores the tag data of any radio tag held in a section from which to read data.

The non-target storage unit stores at least the identification data of any radio tag existing outside sections and sections that surround the section. The target tag storage unit stores all tag data read from radio tags via the antenna, except the tag data containing the identification data stored in the non-target tag storage unit.

JP 2003 030601 A relates to a method for identifying electronic tags having an identification code in several rows, by a base station transmitting interrogation commands specifying at least one row of said code, each tag transmitting, in response, the value of its code for each said rank.

JP 2003 030601 A relates to a non-contact reader-writer, where an RF part of the non-contact type reader-writer reads data from the non-contact type data carrier through an antenna. In receiving the data from the RF part, in the case that the same data as the received data are present in a buffer memory, a control part integrates the two pieces of the data, and in the case that the same data are not present in the buffer memory, it stores the received data in the buffer memory.

EP 1 063 604 A1 relates to a method of radio-identifying a plurality of objects, each provided with a passive transponder transmitting an individual code to a common reader, the latter remote-powering the transponders and handling an anti-collision protocol for code blocks issuing simultaneously from the transponders.

### SUMMARY OF THE INVENTION

One of the objects of the present invention is to improve prior art techniques and overcome at least some of the prior art problems as for instance above illustrated.

The object of the invention is achieved by the subject-matter of the independent claim. Advantageous embodiments are defined in the dependent claims. Further examples are provided for facilitating the understanding of the invention.

According to a first aspect of the present invention, it is provided a tag reading device according to claim 1.

Optionally, in the device according to the first aspect of the invention, the processor is configured to remove a serial number based on a header from the tag information recorded in order in the buffer memory, convert the tag information into information in which the commodity code that specifies the commodity is recognizable, and transmit the tag information to the higher-level device via the external interface.

Optionally, in the device according to the first aspect of the invention, the processor is configured to notify the higher-level device of an error when the buffer memory becomes full.

Optionally, in the device according to the first aspect of the invention, the processor is configured to prompt an operator to press a clear button when the buffer memory becomes full, the clear button configured to instruct clearing the tag information recorded in the buffer memory, the processor configured to clear the buffer memory in response to an input to the clear button.

Optionally, in the device according to the first aspect of the invention, the processor is configured to notify the higher-level device of a near end when the tag information recorded in the buffer memory exceeds a predetermined threshold.

Optionally, in the device according to the first aspect of the invention, the tag information further includes (1) at least one of code type information or a serial number and (2) commodity code information.

Optionally, in the device according to the first aspect of the invention, the buffer memory includes a ring buffer.

According to a second aspect of the invention, it is provided a tag reading system according to claim 8.

Optionally, in the system according to the second aspect of the invention, the processor is configured to remove a serial number based on a header from the tag information recorded in order in the buffer memory, convert the tag information into information in which the commodity code that specifies the commodity is recognizable, and transmit the tag information to the higher-level device via the external interface.

Optionally, in the system according to the second aspect of the invention, the processor is configured to notify the higher-level device of an error when the buffer memory becomes full.

Optionally, in the system according to the second aspect of the invention, the processor is configured to prompt an operator to press a clear button when the buffer memory becomes full, the clear button configured to instruct clearing the tag information recorded in the buffer memory, the processor configured to clear the buffer memory in response to an input to the clear button.

Optionally, in the system according to the second aspect of the invention, the processor is configured to notify the higher-level device of a near end when the tag information recorded in the buffer memory exceeds a predetermined threshold.

### DESCRIPTION OF THE DRAWINGS

FIG. 1 is a block diagram schematically showing a configuration (structural) example of a POS system as a tag reading system including a tag reading device according to at least one embodiment;
FIG. 2 is a block diagram showing a configuration example of a control system in the tag reading device according to at least one embodiment.
FIG. 3 is a diagram showing a configuration example of a buffer memory that stores tag information read from an RFID tag by the tag reading device according to at least one embodiment;
FIG. 4 is a diagram showing a configuration example of tag information read from an RFID tag by the tag reading device according to at least one embodiment;
FIG. 5 is a flowchart for illustrating a first operation example of the tag reading device according to at least one embodiment;
FIG. 6 is a flowchart for illustrating a second operation example of the tag reading device according to at least one embodiment; and
FIG. 7 is a flowchart for illustrating a third operation example of the tag reading device according to at least one embodiment.

### DETAILED DESCRIPTION

In order to solve the above problems, an object is to provide a tag reading device capable of outputting information that can reduce the processing of a higher-level device.

In general, according to at least one embodiment, a tag reading device includes an external interface, an RFID interface, a buffer memory, and a processor. The external interface communicates with a higher-level device. The RFID interface reads tag information from an RFID tag. The buffer memory sequentially records the tag information read from the RFID tag using the RFID interface. The processor extracts a commodity code for specifying a commodity from the tag information recorded in order in the buffer memory, transmits the commodity code to the higher-level device through the external interface, and updates a transmission start pointer indicating untransmitted tag information in the buffer memory.

At least one embodiment will be described below with reference to the drawings.

A tag reading system according to at least one embodiment is a system including a tag reading device that reads an RFID tag (wireless tag) and a higher-level device. For example, the tag reading system may be a system that reads an RFID tag attached to a commodity that a customer intends to purchase, or a system that reads an RFID tag attached to an article existing in a warehouse or a shelf.

An RFID tag is attached to an article such as a commodity or a part, and tag information including information specifying the article is recorded in an internal memory. The RFID tag is activated by the radio wave from the tag reading device and outputs the tag information recorded in its own memory. In at least one embodiment, as an example, it is assumed that the RFID tag is a tag attached to each commodity sold in the store and tag information including information indicating the commodity is recorded.

The tag reading device reads tag information from each RFID tag within the communication range (reading range) of wireless communication. If there are a plurality of RFID tags in the communication range, the tag reading device will read a plurality of pieces of tag information from the RFID tags. The tag reading device may be, for example, a device that reads an RFID tag that is installed at a predetermined position and that exists in a predetermined communication range, or may be a handy type device that is operated by an operator holding the handy type device in a hand.

Hereinafter, a POS system as a tag reading system including the tag reading device according to the embodiment will be described.

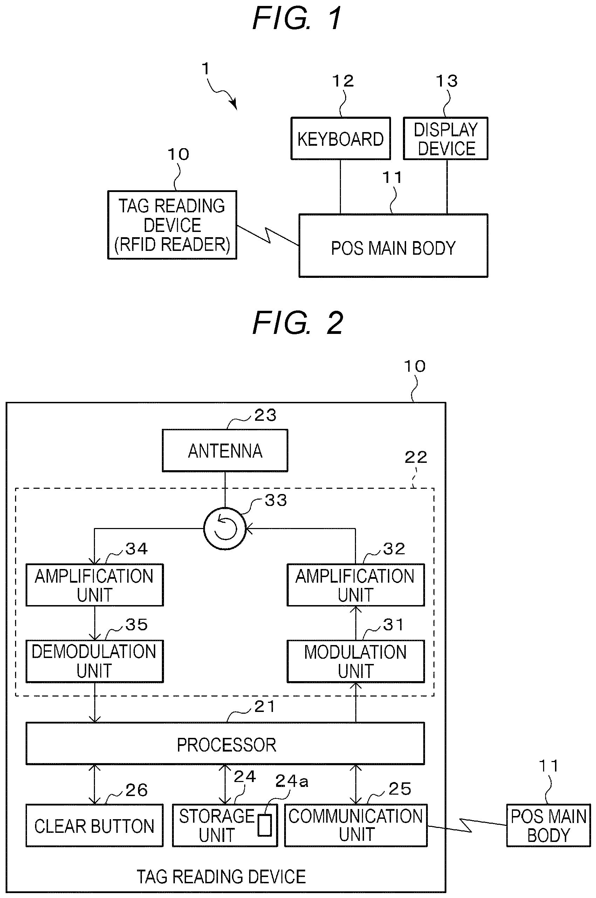

FIG. 1 is a block diagram schematically showing a configuration example of a POS system 1 as a tag reading system including a tag reading device 10 according to at least one embodiment.

The POS system 1 includes the tag reading device 10 and a POS main body 11. In addition to the tag reading device 10, a keyboard 12 and a display device 13 are connected to the POS main body 11. The POS main body 11 is arranged, for example, in a check-out lane of the store where the customer pays for a commodity to be purchased. Here, the counter provided in the checkout lane is provided with a reading area on which the commodity to be purchased is placed. The reading area is an area where the tag reading device 10 can read an RFID tag attached to a commodity. The customer who purchases the commodity places the commodity to be purchased by himself/herself in the reading area. It is premised that a commodity is attached with an RFID tag in which tag information including information indicating the commodity is recorded. The commodity to which the RFID tag is attached may be placed directly in the reading area or may be set in the reading area while being housed in a commodity storage unit such as a shopping basket or a bag.

The tag reading device 10 reads an RFID tag attached to a commodity that a customer purchases in a checkout lane of a store. The tag reading device 10 is arranged to read tag information from an RFID tag attached to a commodity in a reading area by wireless communication. The tag reading device 10 outputs the information read from the RFID tag to the point of sales (POS) main body 11 as a higher-level device.

The POS main body 11 registers the information of the commodity to be purchased by the customer based on the reading result of the RFID tag acquired from the tag reading device 10. The POS main body 11 specifies the commodity to be purchased based on RFID tag data read by the tag reading device 10. The POS main body 11 regards the commodity specified based on the data of the RFID tag as a purchased commodity and generates sales data of the purchased commodity. The POS main body 11 registers the generated sales data of the purchased commodities and calculates the total price of the purchased commodities. The POS main body 11 executes a settlement process for the calculated total amount of purchased commodities.

The POS main body 11 may be connected to a barcode reader (BCR) that reads a barcode including information specifying a commodity described in a commodity package or the like. Here, the POS main body 11 may read the barcode described on the package of the commodity by the barcode reader (BCR) to add the commodity to be purchased. The POS main body 11 may add a commodity to be purchased based on information input using the keyboard 12 or the display device (for example, a display device with a touch panel) 13.

The POS main body 11 includes an interface for connecting the tag reading device 10, the keyboard 12, the display device 13, or the BCR. Here, the interface for the POS main body 11 to connect the tag reading device 10 can be realized with the same configuration as the interface for connecting the BCR. That is, the tag reading device 10 according to the present embodiment can be connected to the BCR interface included in the POS main body 11 and may be connected to the POS main body 11 instead of the BCR. As a result, the POS main body 11 can process the tag information including the commodity information acquired from the tag reading device 10 in the same manner as the commodity information acquired from the BCR.

Next, the configuration of the tag reading device 10 according to at least one embodiment will be described.

FIG. 2 is a block diagram showing a configuration example of a control system in the tag reading device 10 according to at least one embodiment.

As shown in FIG. 2, the tag reading device 10 includes a processor 21, a communication control circuit 22, an antenna 23, a storage unit 24, a communication unit 25, and a clear button 26.

The processor 21 controls each unit. The processor 21 realizes control of each unit and various data processing by executing programs. The processor 21 includes an arithmetic circuit such as a CPU. The processor 21 may be a control unit including an internal memory. The processor 21 executes various processes by executing the program stored in the storage unit 24 or the internal memory. For example, the processor 21 interprets a command from the higher-level device (POS main body 11) received by the communication unit 25 and executes processing according to the command.

The communication control circuit 22 and the antenna 23 form an RFID interface for reading an RFID tag.

The communication control circuit 22 includes a control circuit for communicating with the RFID tag via the antenna 23. The communication control circuit 22 causes the antenna 23 to transmit a transmission signal (radio wave) including tag information supplied from the processor 21. The antenna 23 outputs the transmission signal supplied from the communication control circuit 22 into the reading area as a radio wave that can be received by the RFID tag.

The communication control circuit 22 not only outputs the transmission signal from the antenna 23 but also supplies a received signal received by the antenna 23 to the processor 21 as reception data. That is, the communication control circuit 22 acquires the signal received by the antenna 23 from the RFID tag and supplies the information included in the signal received from the RFID tag to the processor 21.

In the configuration example shown in FIG. 2, the communication control circuit 22 includes a modulation unit 31, a transmission side amplification unit 32, a directional coupler 33, a reception side amplification unit 34, and a demodulation unit 35, for example. The modulation unit 31 modulates the carrier wave with the transmission data given from the processor 21. The transmission side amplification unit 32 amplifies the output signal of the modulation unit 31. The directional coupler 33 supplies the output signal of the transmission side amplification unit 32 to the antenna 23. As a result, the communication control circuit 22 outputs the carrier wave modulated with the transmission data from the antenna 23.

The RFID tag receives the radio wave transmitted from the antenna 23. The RFID tag recognizes a read command included in the signal received from the antenna 23, for example. When the RFID tag recognizes the read command, the RFID tag outputs the data (tag information) stored in its own memory, for example, by backscatter modulation, in radio waves.

The antenna 23 receives the radio wave output from the RFID tag. The directional coupler 33 acquires the received signal received by the antenna 23 and supplies the acquired received signal to the reception side amplification unit (reception side amplifier) 34. The reception side amplification unit 34 amplifies the received signal of the antenna 23. The demodulation unit 35 demodulates a data signal from the signal amplified by the reception side amplification unit 34.

The antenna 23 may be any as long as the antenna transmits and receives radio waves to and from the RFID tag. That is, the antenna 23 may be any as long as the antenna transmits a signal to be supplied to the RFID tag and receives a radio wave output from the RFID tag. In at least one embodiment, the antenna 23 is arranged to transmit electromagnetic waves toward the reading area. The tag reading device 10 is configured to communicate with the RFID tags attached to all the commodities arranged in the reading area via the antenna 23. The antenna 23 is, for example, a planar antenna. However, the antenna 23 is not limited to a particular configuration.

The communication unit 25 is an external interface for communicating with an external device. The communication unit 25 communicates with the POS main body 11 as a higher-level device. The communication unit 25 may be an interface for connecting to the POS main body 11 and may be a wired interface or a wireless interface.

The storage unit 24 is configured to store data. The storage unit 24 may be any as long as a memory that stores rewritable data is included. For example, the storage unit 24 may be configured to include various memories such as RAM, ROM, and NVM. In at least one embodiment, the storage unit 24 includes a buffer memory 24a that stores the tag information read from the RFID tag. The buffer memory 24a may be provided in the memory area of the storage unit 24 as a predetermined size or as a variable size.

The clear button 26 is a button for instructing to clear the tag information accumulated in the buffer memory 24a. The clear button 26 may be any button as long as the button can be actuated by the operator, and may be configured with a hard key or may be realized by a display device with a touch panel.

Next, the configuration of the buffer memory 24a provided in the storage unit 24 of the tag reading device 10 will be described.

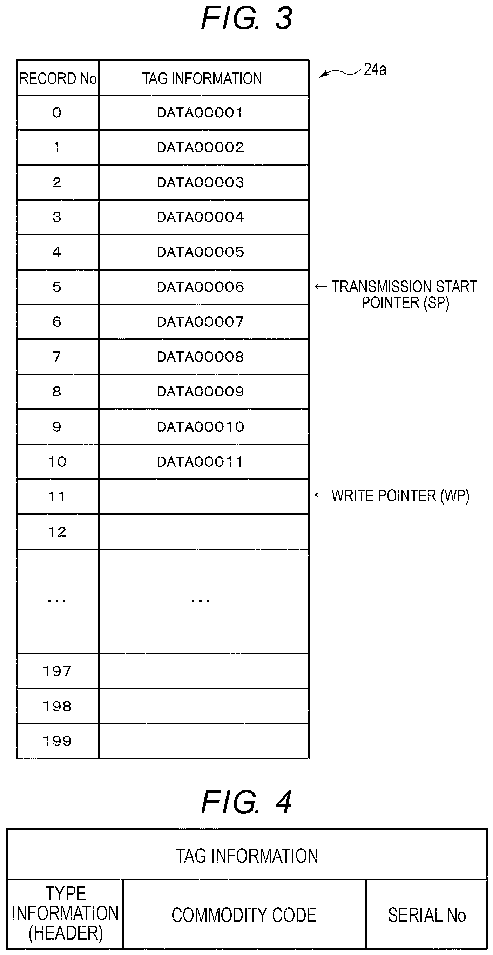

FIG. 3 is a diagram showing a configuration example of the buffer memory 24a provided in the storage unit 24 of the tag reading device 10 according to at least one embodiment.

As shown in FIG. 3, the buffer memory 24a is provided with a plurality of record areas for storing tag information read from individual RFID tags. The size of the buffer memory 24a (the number of record areas) can be set as appropriate and may be a predetermined size or a variable size.

In the buffer memory 24a, the tag information is sequentially stored in each record area to set various pointers . In the configuration example shown in FIG. 3, a write pointer WP and a transmission start pointer SP are set in the record area of the buffer memory 24a. The write pointer WP is a pointer indicating a record area in which tag information is written. The transmission start pointer SP is a pointer indicating tag information (record area) for starting transmission. For example, the processor 21 refers to the write pointer WP to determine the record area in which the tag information read from the RFID tag is stored. When outputting the read tag information to the POS main body 11 as the higher-level device, the processor 21 outputs the tag information stored in each record area in order from the record area indicated by the transmission start pointer SP.

The buffer memory 24a may be configured as a ring buffer in which a predetermined number of record areas are set. When the buffer memory 24a serving as the ring buffer becomes full due to the tag information read from many RFID tags, the tag information newly read is sequentially overwritten from the oldest record area.

The buffer memory 24a may not be a ring buffer and may have a predetermined number of record areas set therein. Here, the buffer memory 24a may be set to execute an error process as a buffer full when the tag information is stored in all the record areas.

The buffer memory 24a may be configured so that the size (the number of record areas) can be changed. Here, the buffer memory 24a may secure a new record area and store the read tag information when the buffer becomes full or when a predetermined threshold before the buffer full is exceeded.

Next, the configuration of tag information to be read from an RFID tag attached to a commodity by the tag reading device 10 according to at least one embodiment will be described.

FIG. 4 is a diagram showing a configuration example of tag information to be read from an RFID tag by the tag reading device 10 according to at least one embodiment.

In the example shown in FIG. 4, the tag information to be read from an RFID tag attached to a commodity may include type information, a commodity code, and a serial number.

The type information is information indicating the type of the code included in the tag information. The type information is information including a header. The header is information indicating the format of the tag information and the range of the commodity code in the tag information. In other words, the commodity code included in the tag information to be read from the RFID tag is information that can be extracted based on the header.

The commodity code is information for specifying (identifying) a commodity as a management unit. The commodity code is, for example, a stock-keeping unit (SKU) code, a Japanese article number (JAN) code, or a European article number (EAN) code. The commodity codes are the same information among the RFID tags attached to the same commodity.

The serial number is an identification number attached to each commodity. In the serial number, different numbers are given to individual commodities even for the same commodity. Therefore, the tag information recorded on the RFID tags assigned to a plurality of the same commodities is the tag information having the same commodity code but different serial numbers.

The RFID tag responds with tag information in response to a read command from the tag reading device 10. Therefore, the tag reading device 10 reads the tag information as shown in FIG. 3 from the RFID tag. A higher-level device such as the POS main body 11 may not need all the information included in the tag information. For example, the POS main body 11 is a device that performs a commodity settlement process for paying a price of a commodity to be purchased.

In the commodity settlement process, the POS main body 11 only needs to be able to acquire a commodity code (for example, a JAN code) for specifying a commodity and may not need information such as a serial number. If the entire tag information including the serial number is supplied, the POS main body 11 needs a process of extracting the commodity code that specifies the commodity from the tag information for the commodity settlement process. That is, if the POS main body 11 can acquire only the commodity code that specifies the commodity, the process of extracting the commodity code from the tag information becomes unnecessary, and the commodity settlement process can be efficiently performed.

The tag reading device 10 according to at least one present embodiment extracts a commodity code that specifies a commodity from the tag information read from the RFID tag and supplies the commodity code to the POS main body 11 as the higher-level device. That is, the tag reading device 10 accumulates the tag information read from the RFID tag in the buffer memory 24a. When transmitting the tag information stored in the buffer memory 24a, the tag reading device 10 removes the serial number from the tag information based on the header, converts the tag information into information in which the commodity code specifying the commodity, such as the SKU part (JAN code), is recognizable, and transmits the converted information to the POS main body 11.

Next, the operation of the tag reading device 10 according to at least one embodiment will be described.

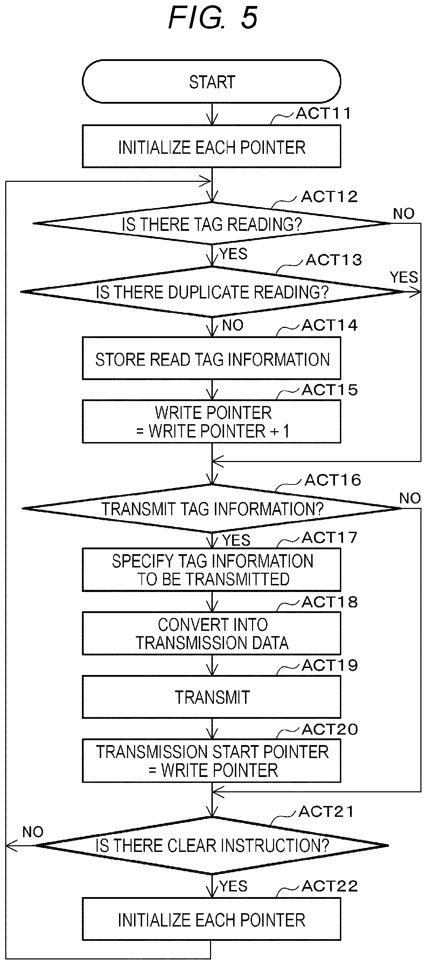

FIG. 5 is a flowchart for illustrating a first operation example of the tag reading device 10 according to the embodiment.

The processor 21 of the tag reading device 10 starts the RFID tag reading process in response to a request from the POS main body 11 as the higher-level device connected via the communication unit 25. When starting the reading of the RFID tag, the processor 21 secures the buffer memory 24a and initializes the write pointer WP and the transmission start pointer SP (ACT 11). For example, the processor 21 sets the write pointer WP to the initial value (WP = 0) and sets the transmission start pointer SP to the initial value (SP = 0) .

As a reading operation of the RFID tag, the processor 21 uses the communication control circuit 22 to transmit a signal indicating a read command from the antenna 23 as a radio wave. For example, the communication control circuit 22 generates a modulated signal obtained by the modulation unit 31 modulating the carrier wave with a read command. The modulated signal is amplified by the transmission side amplification unit 32 and then supplied to the antenna 23 via the directional coupler 33. As a result, the antenna 23 transmits a radio wave indicating the read command.

The antenna 23 is configured to transmit radio waves to the reading area. Therefore, each RFID tag existing in the reading area receives the radio wave from the antenna 23 and is activated to recognize the read command. The RFID tag that recognized the read command transmits a response signal including the tag information stored in its own memory by, for example, backscatter modulation.

The antenna 23 receives the response signal indicating the tag information from the RFID tag. The signal received by the antenna 23 is supplied to the reception side amplification unit 34 via the directional coupler 33. The received signal amplified by the reception side amplification unit 34 is input to the demodulation unit 35 and demodulated into a signal indicating the tag information of the RFID tag. The signal demodulated by the demodulation unit 35 is supplied to the processor 21 as tag information read from the RFID tag.

When the processor 21 acquires the tag information read from the RFID tag by the communication control circuit 22 and the antenna 23 (YES in ACT 12), the processor 21 checks whether the acquired tag information is already read tag information (duplicate reading) (ACT 13). The processor 21 determines whether duplicate reading is performed depending on whether the same tag information as the acquired tag information is stored in the buffer memory 24a.

When it is determined that the duplicate reading is performed (YES in ACT 13), the processor 21 proceeds to ACT 16 without newly storing the tag information in the buffer memory 24a.

If it is determined that the duplicate reading is not performed (NO in ACT 13), the processor 21 stores the tag information read from the RFID tag in the record area indicated by the write pointer WP in the buffer memory 24a (ACT 14). When the tag information is stored in the buffer memory 24a, the processor 21 increments the record area indicated by the write pointer WP (write pointer = write pointer + 1). As a result, the write pointer WP indicates the record area next to the record area that stored the tag information.

The processor 21 determines whether the tag information accumulated in the buffer memory 24a should be transmitted to the POS main body 11 as the higher-level device (ACT 16). For example, the processor 21 transmits the tag information accumulated in the buffer memory 24a to the POS main body 11 in response to a request from the POS main body 11.

If the transmission of the tag information stored in the buffer memory 24a is unnecessary (NO in ACT 16), the processor 21 proceeds to the process of ACT 21.

When outputting the tag information read from the RFID tag (YES in ACT 16), the processor 21 specifies the tag information to be transmitted in the buffer memory 24a based on the transmission start pointer SP (ACT 17). For example, the processor 21 specifies the record area in the buffer memory 24a indicated by the transmission start pointer SP as the record area to start transmission. The processor 21 specifies, as a transmission target, the tag information stored in each record area from the record area where transmission is started to before the record area indicated by the write pointer WP.

When the tag information to be transmitted is specified, the processor 21 extracts the commodity code from each tag information and generates transmission data (ACT 18). For each tag information, the processor 21 extracts the commodity code according to the format indicated by the header to generate the transmission data. The transmission data is the commodity code such as the SKU part (JAN code) from which the serial number or the like is removed based on the header of the tag information, converted into information that can be recognized by the POS main body 11.

When the transmission data is generated from the tag information to be transmitted, the processor 21 transmits the generated transmission data to the POS main body 11 via the communication unit 25 (ACT 19). As a result, the POS main body 11 can acquire a commodity code that specifies a commodity and that does not include unnecessary information such as a serial number.

After transmitting the tag information, the processor 21 of the tag reading device 10 sets the transmission start pointer SP to the same value (position) as the write pointer WP. As a result, in the buffer memory 24a, the record area next to the record area (transmitted record area) in which the transmitted tag information is stored is designated as the record area for starting the next transmission.

The processor 21 also monitors the input to the clear button 26 (ACT 21). Here, it is assumed that the processor 21 receives an instruction to the clear button 26 at any timing. For example, the operator pushes the clear button 26 when he/she wants to clear the tag information that was already read, or when he/she wants to read the RFID tag again.

If there is no input to the clear button 26 (NO in ACT 21), the processor 21 repeatedly executes the processes of ACTS 12 to 21.

Upon detecting the input to the clear button 26 (YES in ACT 21), the processor 21 clears each tag information stored in the buffer memory 24a and initializes the write pointer WP and the transmission start pointer SP (ACT 22). For example, the processor 21 sets the write pointer WP to "WP = 0" and sets the next write position to be the first record area in the buffer memory 24a. The processor 21 sets the transmission start pointer SP to "SP = 0" and sets the transmission start position to be the first record area in the buffer memory 24a.

According to the first operation example as described above, the tag reading device according to at least one embodiment stores the tag information read from the RFID tag in the buffer memory. The tag reading device checks the duplicate reading based on the tag information stored in the buffer memory every time the tag information read from the RFID tag is acquired. The tag reading device sets the transmission start pointer in the buffer memory so that the same tag information is not repeatedly transmitted. The tag reading device specifies the tag information to be transmitted based on the transmission start pointer in response to a request from the higher-level device. The tag reading device removes the serial number from each tag information to be transmitted, converts the tag information into a commodity code such as a JAN code that specifies the commodity, and transmits the commodity code to the higher-level device.

Therefore, the tag reading device can extract and output the information required by the higher-level device from the read tag information without duplicating the tag information read from the specific RFID tag. As a result, the higher-level device does not need to perform a process of duplicated checking the read result of the RFID tag acquired from the tag reading device or extracting necessary information. Thus, it is possible to provide a tag reading device that can reduce the processing of the higher-level device.

In other words, the tag reading device can supply the reading result not requiring for duplicate reading check nor data conversion processing, as the reading result of the RFID tag existing in the reading area, to the higher-level device. As a result, in the higher-level device, the application for processing the reading result of the RFID tag from the tag reading device can be simplified, so that the development load of the application can be reduced.

The tag reading device according to at least one embodiment includes the clear button that instructs to clear the buffer memory that stores the tag information read from the RFID tag. When the clear button is pressed, the tag reading device clears the buffer memory that stores the tag information. As a result, the tag reading device according to the embodiment can re-read the tag information that was read once and can also read the RFID tag again.

Next, a second operation example of the tag reading device 10 according to at least one embodiment will be described.

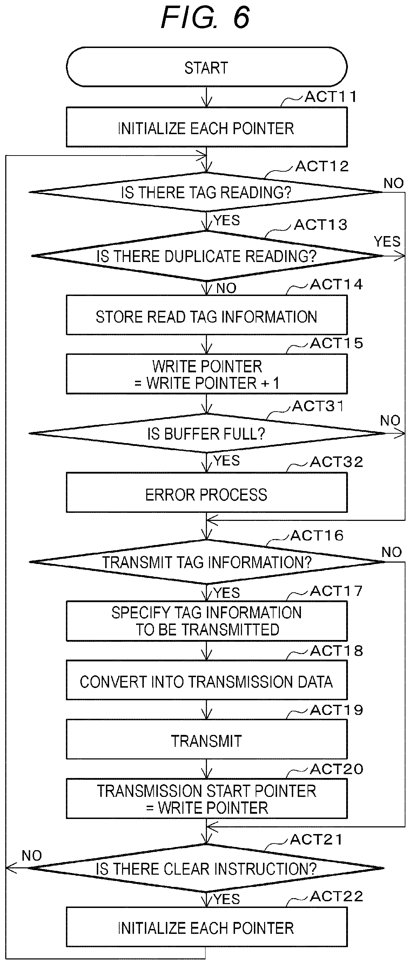

FIG. 6 is a flowchart for illustrating the second operation example of the tag reading device 10 according to at least one embodiment.

The second operation example shown in FIG. 6 is obtained by adding the operations of ACTS 31 and 32 to the first operation example shown in FIG. 5. That is, in the second operation example shown in FIG. 6, the processes other than ACTS 31 and 32 are the same as the respective processes of the operation shown in FIG. 5, and thus the detailed description thereof will be omitted.

As described above, when the processor 21 of the tag reading device 10 stores the tag information in the buffer memory 24a after checking the duplicate reading, the processor 21 increments the write pointer WP (ACT 15). When the tag information is stored, the processor 21 checks whether the buffer memory 24a that stores the tag information became a buffer full (ACT 31) . For example, the processor 21 determines whether the buffer is full, depending on whether the incremented write pointer WP exceeds the number of record areas secured in the buffer memory 24a.

When it is determined that the buffer memory 24a became a buffer full (YES in ACT 31), the processor 21 executes an error process (ACT 32). As an error process, the processor 21 notifies the POS main body 11 via the communication unit 25 that an error due to a buffer full occurred. The processor 21 stops the reading operation of the RFID tag as an error process.

The processor 21 may accept a tag information transmission request from the POS main body 11 while stopping the RFID tag reading operation as an error process. Here, the processor 21 may execute the process of transmitting the tag information in the buffer memory 24a in response to the transmission request from the POS main body 11 by the same processes as ACTS 16 to 19. After executing the process of transmitting the tag information, the processor 21 may return from the error process and restart the processes from ACT 12.

Alternatively, the processor 21 may receive the input to the clear button 26 while stopping the RFID tag reading process as the error process. Here, if the clear button 26 is pressed, the processor 21 may clear the buffer memory 24a by the same processes as ACTS 20 and 21 and restart the RFID tag reading process from ACT 12.

As described above, in addition to the operation described in the first operation example described above, the tag reading device according to the second operation example executes an error process when the buffer memory for storing the tag information read from the RFID tag becomes full. As the error process when the buffer becomes full, the tag reading device notifies the higher-level device, such as the POS main body, that the buffer is full, and stops the reading operation of the RFID tag.

Therefore, in the tag reading system, it is possible to recognize that the reading of the RFID tag stopped because the tag reading device became a buffer full in the higher-level device. As a result, the higher-level device can restart the reading of the RFID tag by acquiring the tag information as the reading result accumulated in the buffer memory of the tag reading device.

Next, a third operation example of the tag reading device 10 according to at least one embodiment will be described.

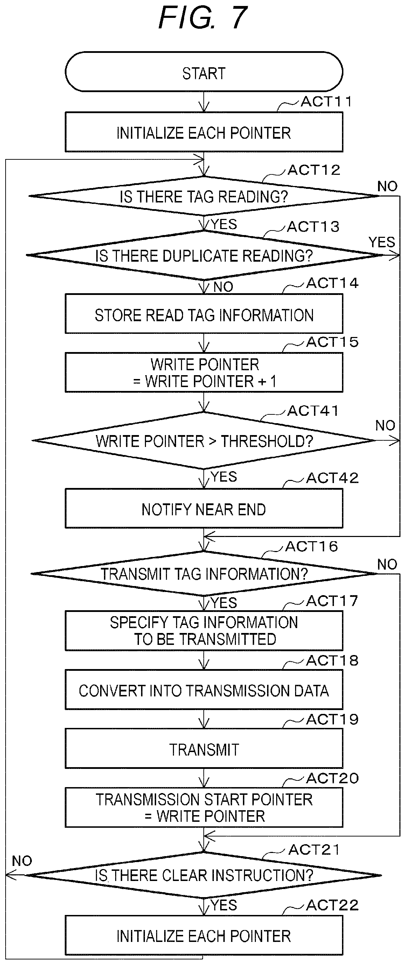

FIG. 7 is a flowchart for illustrating the third operation example as the operation of the tag reading device 10 according to at least one embodiment.

The third operation example shown in FIG. 7 is obtained by adding the operations of ACTS 41 and 42 to the first operation example shown in FIG. 5. Here, in the third operation example as shown in FIG. 7, the processes other than ACTS 41 and 42 are the same as the respective processes of the operation shown in FIG. 5, and thus the detailed description thereof will be omitted.

As described above, when the processor 21 of the tag reading device 10 stores the tag information in the buffer memory 24a after checking the duplicate reading, the processor 21 increments the write pointer WP (ACT 15). When the tag information is stored in the buffer memory 24a, the processor 21 checks whether the number of pieces of tag information stored in the buffer memory 24a exceeds a predetermined threshold (ACT 41). For example, the processor 21 determines whether the value of the write pointer WP incremented after storing the tag information in the buffer memory 24a exceeds a predetermined threshold.

When it is determined that the number of pieces of tag information stored in the buffer memory 24a exceeds the predetermined threshold (YES in ACT 41), the processor 21 executes a near-end process (ACT 42). As the near-end process, the processor 21 notifies the POS main body 11 via the communication unit 25 that the buffer memory 24a is almost full (near-end). The processor 21 may stop the RFID tag reading process as the near-end process.

The processor 21 may perform guidance for prompting a request for transmission of tag information from the POS main body 11 while stopping the RFID tag reading process as the near-end process. Here, if there is a transfer request from the POS main body 11, the processor 21 may execute the process of transmitting the tag information in the buffer memory 24a by the same processes as ACTS 16 to 19.

The processor 21 may prompt the input to the clear button 26 while stopping the RFID tag reading process as the near-end process. Here, if the clear button 26 is pressed, the processor 21 clears the buffer memory 24a by the same processes as ACTS 20 and 21 and performs the RFID tag reading process again.

As described above, in addition to the operation described in the first operation example described above, when the tag information read from the RFID tag and stored in the buffer memory exceeds the threshold, the tag reading device according to the third operation example notifies the higher-level device that the buffer memory is in the near-end state.

Therefore, in the tag reading system, the higher-level device can recognize that the buffer memory of the tag reading device is near the buffer full. As a result, in the tag reading system, it is possible to prompt a process such as loading the tag information as the reading result accumulated in the buffer memory of the tag reading device into the higher-level device.

The above-described third operation example can also be implemented in combination with the above-mentioned second operation example. Here, when the amount of tag information stored in the buffer memory exceeds the predetermined threshold, the tag reading device notifies the higher-level device of the near end and when the buffer memory becomes a buffer full, the tag reading device stops the RFID tag reading operation and notifies the higher-level device of a buffer full warning. As a result, the higher-level device can be notified that the buffer memory that stores the tag information as the reading result of the RFID tag is in the near-end state and that the buffer memory is full.

In the above-described embodiments, the case where the program executed by the processor is stored in advance in the memory in the device was described. However, the program executed by the processor may be downloaded from the network to the device or may be installed from the storage medium to the device. The storage medium may be a storage medium such as a CD-ROM that can store a program and can be read by the device. The function obtained in advance by installation or download may be realized in cooperation with an operating system (OS) inside the device.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as indicated by the appended claims.

## Claims

1. A tag reading device (10) comprising:
an external interface configured to communicate with a higher-level device (11);
an RFID interface configured to read tag information from an RFID tag;
a buffer memory (24a) configured to sequentially record the tag information read from the RFID tag using the RFID interface if the tag information is not duplicate information;
**characterized in that** the tag reading device further comprises:
a processor (21) configured to:
determine whether newly acquired tag information is already read tag information as duplicate information,
extract a commodity code for specifying a commodity from the tag information sequentially recorded in the buffer memory (24a),
transmit the commodity code to the higher-level device (11) via the external interface starting from a starting point (SP), and
update a transmission start pointer indicating the starting point in the buffer memory (24a) which follows the transmitted tag information;
and **in that** the tag reading device (10) comprises a clear button configured to instruct clearing of the tag information recorded in the buffer memory (24a), wherein the processor (21) is further configured to clear the buffer memory (24a) in response to an input to the clear button.

2. The device (10) according to claim 1, wherein
the processor (21) is configured to:
remove a serial number based on a header from the tag information recorded in order in the buffer memory (24a),
convert the tag information into information in which the commodity code that specifies the commodity is recognizable, and
transmit the tag information to the higher-level device (11) via the external interface.

3. The device (10) according to any of claims 1 to 2, wherein
the processor (21) is configured to notify the higher-level device (11) of an error when the buffer memory (24a) becomes full.

4. The device (10) according to any of claims 1 to 3, wherein the processor (21) is configured to prompt an operator to press a clear button when the buffer memory (24a) becomes full, the clear button configured to instruct clearing the tag information recorded in the buffer memory (24a), the processor (21) configured to clear the buffer memory (24a) in response to an input to the clear button.

5. The device (10) according to any of claims 1 to 4, wherein
the processor (21) is configured to notify the higher-level device (11) of a near end when the tag information recorded in the buffer memory (24a) exceeds a predetermined threshold.

6. The device (10) according to any of claims 1 to 5, wherein the tag information further includes (1) at least one of code type information or a serial number and (2) commodity code information.

7. The device (10) according to any of claims 1 to 6, wherein the buffer memory (24a) includes a ring buffer.

8. A tag reading system (1) comprising:
a higher-level device (11); and
a tag reading device (10) according to any of claims 1 to 7.

9. The system (1) according to claim 8, wherein
the processor (21) is configured to:
remove a serial number based on a header from the tag information recorded in order in the buffer memory (24a),
convert the tag information into information in which the commodity code that specifies the commodity is recognizable, and
transmit the tag information to the higher-level device (11) via the external interface.

10. The system (1) according to any of claims 8 to 9, wherein
the processor (21) is configured to notify the higher-level device of an error when the buffer memory (24a) becomes full.

11. The system (1) according to any of claims 8 to 10, wherein the processor (21) is configured to prompt an operator to press a clear button when the buffer memory (24a) becomes full, the clear button configured to instruct clearing the tag information recorded in the buffer memory, the processor (21) configured to clear the buffer memory (24a) in response to an input to the clear button.

12. The system (1) according to any of claims 8 to 11, wherein
the processor (21) is configured to notify the higher-level device (11) of a near end when the tag information recorded in the buffer memory (24a) exceeds a predetermined threshold.

## Patentansprüche

1. Tag-Lesevorrichtung (10), umfassend:
eine externe Schnittstelle, die für die Kommunikation mit einer übergeordneten Vorrichtung (11) konfiguriert ist;
eine RFID-Schnittstelle, die zum Lesen von Tag-Informationen von einem RFID-Tag konfiguriert ist;
einen Pufferspeicher (24a), der so konfiguriert ist, dass er die von dem RFID-Tag unter Verwendung der RFID-Schnittstelle gelesenen Tag-Informationen sequentiell aufzeichnet, wenn die Tag-Informationen keine doppelten Informationen sind;
**dadurch gekennzeichnet, dass** die Tag-Lesevorrichtung weiter umfasst:
einen Prozessor (21), der konfiguriert ist zum:
Bestimmung, ob neu erfasste Tag-Informationen bereits gelesene Tag-Informationen als doppelte Informationen sind,
Extrahieren eines Warencodes zur Spezifizierung einer Ware aus den im Pufferspeicher (24a) sequentiell aufgezeichneten Tag-Informationen,
Übermittlung des Warencodes an die übergeordnete Vorrichtung (11) über die externe Schnittstelle, ausgehend von einem Startpunkt (SP), und
Aktualisieren eines Übertragungsstartzeigers, der den Startpunkt im Pufferspeicher (24a) angibt, der auf die übertragenen Tag-Informationen folgt;
und dadurch, dass die Tag-Lesevorrichtung (10) eine Löschtaste umfasst, die so konfiguriert ist, dass sie das Löschen der im Pufferspeicher (24a) aufgezeichneten Tag-Informationen anweist, wobei der Prozessor (21) weiter so konfiguriert ist, dass er den Pufferspeicher (24a) als Reaktion auf eine Eingabe in die Löschtaste löscht.

2. Vorrichtung (10) nach Anspruch 1, wobei der Prozessor (21) konfiguriert ist zum:
Entfernen einer Seriennummer auf der Grundlage einer Kopfzeile aus den im Pufferspeicher (24a) der Reihe nach aufgezeichneten Tag-Informationen,
Umwandeln der Tag-Informationen in Informationen, in denen die Warennummer, die die Ware spezifiziert, erkennbar ist, und
Übermittlung der Tag-Informationen an die übergeordnete Vorrichtung (11) über die externe Schnittstelle.

3. Vorrichtung (10) nach einem der Ansprüche 1 bis 2, wobei
der Prozessor (21) so konfiguriert ist, dass er die übergeordnete Vorrichtung (11) über einen Fehler informiert, wenn der Pufferspeicher (24a) voll wird.

4. Vorrichtung (10) nach einem der Ansprüche 1 bis 3, wobei der Prozessor (21) so konfiguriert ist, dass er einen Bediener auffordert, eine Löschtaste zu drücken, wenn der Pufferspeicher (24a) voll wird, wobei die Löschtaste so konfiguriert ist, dass sie das Löschen der in dem Pufferspeicher (24a) aufgezeichneten Tag-Informationen anweist, wobei der Prozessor (21) so konfiguriert ist, dass er den Pufferspeicher (24a) als Reaktion auf eine Eingabe der Löschtaste löscht.

5. Vorrichtung (10) nach einem der Ansprüche 1 bis 4, wobei
der Prozessor (21) so konfiguriert ist, dass er die übergeordnete Vorrichtung (11) über ein nahes Ende benachrichtigt, wenn die im Pufferspeicher (24a) aufgezeichneten Tag-Informationen einen vorbestimmten Schwellenwert überschreiten.

6. Vorrichtung (10) nach einem der Ansprüche 1 bis 5, wobei die Tag-Informationen weiter mindestens eine von Code-Typ-Informationen oder einer Seriennummer und (2) Warencode-Informationen einschließen (1).

7. Vorrichtung (10) nach einem der Ansprüche 1 bis 6, wobei der Pufferspeicher (24a) einen Ringpuffer einschließt.

8. Tag-Lesesystem (1), umfassend:
eine übergeordnete Vorrichtung (11); und
eine Tag-Lesevorrichtung (10) nach einem der Ansprüche 1 bis 7.

9. System (1) nach Anspruch 8, wobei der Prozessor (21) konfiguriert ist zum:
Entfernen einer Seriennummer auf der Grundlage einer Kopfzeile aus den im Pufferspeicher (24a) der Reihe nach aufgezeichneten Tag-Informationen,
Umwandeln der Tag-Informationen in Informationen, in denen die Warennummer, die die Ware spezifiziert, erkennbar ist, und
Übermittlung der Tag-Informationen an die übergeordnete Vorrichtung (11) über die externe Schnittstelle.

10. System (1) nach einem der Ansprüche 8 bis 9, wobei
der Prozessor (21) so konfiguriert ist, dass er die übergeordnete Vorrichtung über einen Fehler informiert, wenn der Pufferspeicher (24a) voll wird.

11. System (1) nach einem der Ansprüche 8 bis 10, wobei der Prozessor (21) so konfiguriert ist, dass er einen Bediener auffordert, eine Löschtaste zu drücken, wenn der Pufferspeicher (24a) voll wird, wobei die Löschtaste so konfiguriert ist, dass sie das Löschen der in dem Pufferspeicher aufgezeichneten Tag-Informationen anweist, wobei der Prozessor (21) so konfiguriert ist, dass er den Pufferspeicher (24a) als Reaktion auf eine Eingabe der Löschtaste löscht.

12. System (1) nach einem der Ansprüche 8 bis 11, wobei
der Prozessor (21) so konfiguriert ist, dass er die übergeordnete Vorrichtung (11) über ein nahes Ende benachrichtigt, wenn die im Pufferspeicher (24a) aufgezeichneten Tag-Informationen einen vorbestimmten Schwellenwert überschreiten.

## Revendications

1. Dispositif de lecture d'étiquettes (10) comprenant :
une interface externe configurée pour communiquer avec un dispositif de niveau supérieur (11) ;
une interface RFID configurée pour lire des informations d'étiquette à partir d'une étiquette RFID ;
une mémoire tampon (24a) configurée pour enregistrer séquentiellement les informations d'étiquette à partir de l'étiquette RFID en utilisant l'interface RFID si les informations d'étiquette ne sont pas des informations en double ;
**caractérisé en ce que** le dispositif de lecture d'étiquettes comprend en outre :
un processeur (21) configuré pour :
déterminer si des informations d'étiquette nouvellement acquises sont des informations d'étiquette déjà lues en tant qu'informations en double,
extraire un code d'article pour spécifier un article à partir des informations d'étiquette enregistrées séquentiellement dans la mémoire tampon (24a),
transmettre le code d'article au dispositif de niveau supérieur (11) via l'interface externe en débutant à un point de début (SP), et
mettre à jour un pointeur de début de transmission indiquant le point de début dans la mémoire tampon (24a) qui suit les informations d'étiquette transmises ;
et **en ce que** le dispositif de lecture d'étiquettes (10) comprend un bouton d'effacement configuré pour donner l'ordre d'effacer les informations d'étiquette enregistrées dans la mémoire tampon (24a), dans lequel le processeur (21) est en outre configuré pour effacer la mémoire tampon (24a) en réponse à une entrée sur le bouton d'effacement.

2. Dispositif (10) selon la revendication 1, dans lequel le processeur (21) est configuré pour :
supprimer un numéro de série basé sur un en-tête des informations d'étiquette enregistrées dans l'ordre dans la mémoire tampon (24a),
convertir les informations d'étiquette en informations dans lesquelles le code d'article qui spécifie l'article est reconnaissable, et
transmettre les informations d'étiquette au dispositif de niveau supérieur (11) via l'interface externe.

3. Dispositif (10) selon l'une quelconque des revendications 1 à 2, dans lequel
le processeur (21) est configuré pour notifier au dispositif de niveau supérieur (11) une erreur lorsque la mémoire tampon (24a) est pleine.

4. Dispositif (10) selon l'une quelconque des revendications 1 à 3, dans lequel le processeur (21) est configuré pour inviter un opérateur à appuyer sur un bouton d'effacement lorsque la mémoire tampon (24a) est pleine, le bouton d'effacement étant configuré pour donner l'ordre d'effacer les informations d'étiquette enregistrées dans la mémoire tampon (24a), le processeur (21) étant configuré pour effacer la mémoire tampon (24a) en réponse à une entrée sur le bouton d'effacement.

5. Dispositif (10) selon l'une quelconque des revendications 1 à 4, dans lequel
le processeur (21) est configuré pour notifier au dispositif de niveau supérieur (11) une fin proche lorsque les informations d'étiquette enregistrées dans la mémoire tampon (24a) dépassent un seuil prédéterminé.

6. Dispositif (10) selon l'une quelconque des revendications 1 à 5, dans lequel les informations d'étiquette incluent en outre (1) au moins un d'informations de type de code ou d'un numéro de série et (2) des informations de code d'article.

7. Dispositif (10) selon l'une quelconque des revendications 1 à 6, dans lequel la mémoire tampon (24a) inclut un tampon circulaire.

8. Système de lecture d'étiquettes (1) comprenant :
un dispositif de niveau supérieur (11) ; et
un dispositif de lecture d'étiquettes (10) selon l'une quelconque des revendications 1 à 7.

9. Système (1) selon la revendication 8, dans lequel le processeur (21) est configuré pour :
supprimer un numéro de série basé sur un en-tête des informations d'étiquette enregistrées dans l'ordre dans la mémoire tampon (24a),
convertir les informations d'étiquette en informations dans lesquelles le code d'article qui spécifie l'article est reconnaissable, et
transmettre les informations d'étiquette au dispositif de niveau supérieur (11) via l'interface externe.

10. Système (1) selon l'une quelconque des revendications 8 à 9, dans lequel
le processeur (21) est configuré pour notifier au dispositif de niveau supérieur une erreur lorsque la mémoire tampon (24a) est pleine.

11. Système (1) selon l'une quelconque des revendications 8 à 10, dans lequel le processeur (21) est configuré pour inviter un opérateur à appuyer sur un bouton d'effacement lorsque la mémoire tampon (24a) est pleine, le bouton d'effacement étant configuré pour donner l'ordre d'effacer les informations d'étiquette enregistrées dans la mémoire tampon, le processeur (21) étant configuré pour effacer la mémoire tampon (24a) en réponse à une entrée sur le bouton d'effacement.

12. Système (1) selon l'une quelconque des revendications 8 à 11, dans lequel
le processeur (21) est configuré pour notifier au dispositif de niveau supérieur (11) une fin proche lorsque les informations d'étiquette enregistrées dans la mémoire tampon (24a) dépassent un seuil prédéterminé.
